# EUROPEAN PATENT APPLICATION

(11) **EP 3 506 193 A1**
(43) Date of publication of application: **03.07.2019**
(21) Application number: 18212949.4
(22) Date of filing: 17.12.2018
(51) Int. Cl.: G06Q 50/16, G06F 21/36

(54) **METHOD FOR INITIALIZING A LOCALIZED, ONE-TIME COMMUNICATION BETWEEN COMMUNICATION COMPUTERIZED DEVICES**

(30) Priority: 28.12.2017 IT 201700150407
(71) Applicant: INFOCERT S.p.A., 00187 Roma (IT)
(72) Inventor: GIORGI, MAURO, I-00187 ROMA (IT); ODDI, LUCA, I-000187 ROMA (IT)
(74) Representative: Perronace, Andrea

(57) **Abstract**

The present invention relates to a method for initializing a localized, one-time communication between communication computerized devices. The system comprises a server (140) and:
- a "claimer device" (171), and a "customer device" (181), on which programs termed "claimer program" (130) and "customer program (150)" are respectively installed for initializing a one-time communication;
- a device (160) for generating one-time password in a predefined area, configured for detecting the presence of said customer device (181) by means of a proximity sensor (161), generating an OTP on the basis of said presence, and communicating said OTP and a univocal ID of the device (160) to said customer device (181).

The method of the present invention comprises acquiring (162), by the claimer program (130), claimer location information by said device (160), and sending it (132) to the server (140), together with claimer identification information (170) and a contact request with the customer device (180). The server (140) identifies the claimer device (180) on the basis of the claimer identification information, and in the positive, sends (142) the contact request to the customer device (181).

## Description

The present invention relates to a method for initializing a localized, one-time communication between communication computerized devices.

### Technical field

The technical field of the present invention is that of systems and methods for initializing a localized, one-time communication between communication computerized devices. By virtue of such systems and methods, it is possible to identify (in assured manner) subjects by means of communications between computerized communication devices, in particular mobile devices.

### Background art

In public or even private interactions, a problem in many cases is constituted by the certain identification of outside subjects with whom it is either necessary or desirable to interact in order to obtain services or information.

This is the case, for example, of a technician who must be granted access to a home for maintenance or to inspect a household appliance.

How can one be sure of the identity of the person in whom they are putting their trust?

Operators who have actual need to gain the trust of their users/customers would also benefit from an authentication system within everyone's grasp.

In a context in which frauds and crime are common occurrence, a solution to the aforesaid problem would be really needed by all citizens.

It is advantageous, in the current situation, to use smartphones (the present application comprises any mobile device with the possibility of installing programs).

It would also be advantageous to have the ability to interact with the user/device regardless of the knowledge of the latter's personal or contact data.

Finally, the need is felt to have a secure connection between communication devices or smartphones.

### Scope and object of the invention

It is the object of the present invention to provide an authentication method and system, i.e. a method and system for initializing a localized, one-time communication between communication computerized devices, which entirely or partially solve the problems and at least partially overcome the drawbacks of the prior art.

It is an object of the present invention a system in accordance with the accompanying claims.

The system of the present description provides a service which has the general object of enabling a function on a mobile device (or other communication computerized device) when a visitor approaches a subject they want to visit (also named "intercom" service). The solution can create a bridge between physical reality and virtual reality, after having subscribed to the service. Advantageously, this bridge can be created by means of a specific device described below, which is a third party with respect to the visitor and to the subject to be visited or to their communication computerized device.

### Detailed description of examples of preferred embodiments of the invention

### List of drawings

The invention will now be described by way of example, with particular reference to the drawings of the accompanying figures, in which:
- figure 1 shows a block chart of a first embodiment of the system according to the present description, which envisages a Customer and/or a customer device, a Claimer and a Server;
- figure 2 shows a more detailed block chart of a second embodiment of the system according to the present description, which envisages a Customer and/or a customer device, a Claimer and/or claimer device, a third interface device and a Server;
- figure 3 diagrammatically shows an interface device used in the system in figure 2;
- figure 4 shows an example of server-side software architecture of the system according to figure 2;
- figure 5 shows a first typical use case of the system according to the present description, by the Customer and/or customer device and by the Claimer and/or claimer device;
- figure 6 shows a second typical use case of the system according to the present description, by the Claimer and/or claimer device only; and
- figure 7 shows a third typical use case of the system according to the present description, by the Customer and/or customer device only.

It is worth noting that hereinafter elements of different embodiments may be combined together to provide further embodiments without restrictions respecting the technical concept of the invention, as a person skilled in the art will effortlessly understand from the description.

The present description also makes reference to the prior art for its implementation, with regard to the detail features which not described, such as, for example, elements of minor importance usually used in the prior art in solutions of the same or similar type.

When an element is introduced in the description or the claims is always understood that it may be "at least one" or "one or more", unless otherwise specified.

In the description or the claims, when a list of elements or features are listed in this description it is understood that the invention according to the invention "comprises" or alternatively "consists of" such elements.

For the purposes of the present description, "subject" or "entity" means a person or even another entity of different nature, including a machine or a robot. In this case, the mobile device can be integrated in the machine or in the robot. For this reason, hereinafter, reference will always be made to the devices associated with the subjects, specifying the presence of the latter only when it is necessary for the sake of clarity of example. Indeed, because such devices are easily integrated in machines or robots, comprising communication functions such as *texting* or conversation (*chatbot*), speaking of devices implies the subject or entity.

### Embodiments

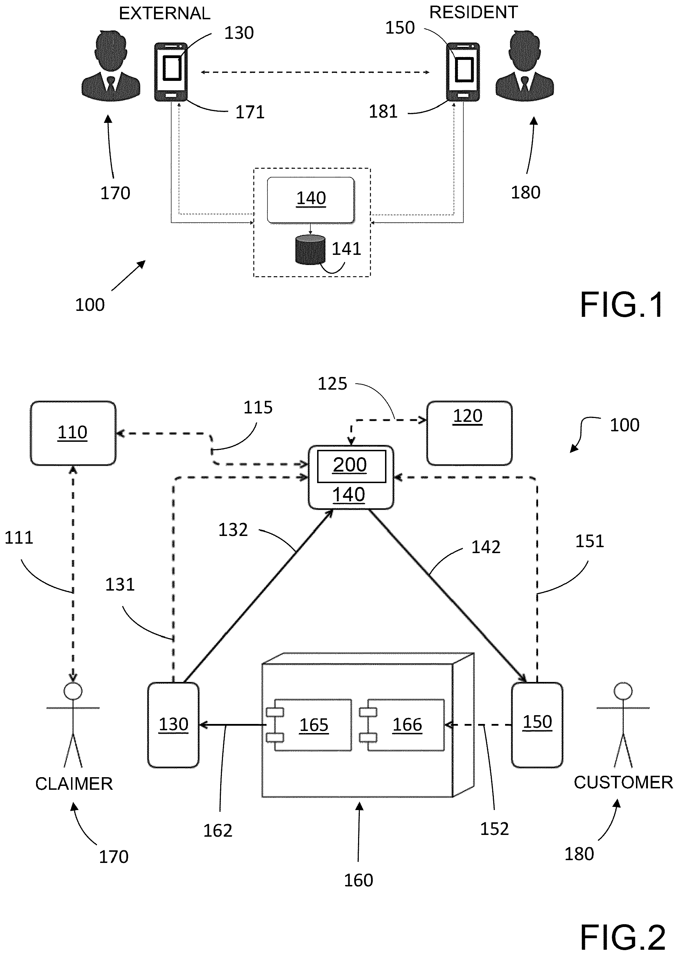

Fig. 1 illustrates an example of general situation of the system 100 according to the present description, in which there are two main entities: a "claimer device" 171 (associated with a "Claimer 170" entity, also termed "visitor" hereinafter) and a "customer device" 181 (associated with a "Customer 170" entity, termed "resident" hereinafter). The claimer device 171 and customer device 181 communicate with a server 140 (advantageously provided with a database 141), which is configured to enable an authentication thereof, in particular of the claimer device 171. Possibly, the claimer device 171 and customer device 171 may also communicate directly (e.g. via GSM and/or data connection if they are both mobile devices). In general, the claimer device and customer device are communication computerized devices in all cases used to communicate with the server, see arrows 131,132 and 142,151 in figure, advantageously at least one of the two devices is a mobile device, the other possibly being a fixed device with appropriate connection capability. An appropriate APP 130,150 to be installed on the mobile devices 171,181, which may be the same or different for the two devices, is envisaged for communication (more generally, reference shall be made to customer program 150 and claimer program 130).

It is worth noting that Claimer and/or Customer may be people who have a remote communication mobile device (or possibly fixed device, wherever possible), or artificial entities, such as robots, which have a mobile or fixed integrated remote communication device.

In addition to the entities described above, the following are used according to the application cases:
- means (e.g. electronic means) for associating the claimer device 171 with a claimer location; and/or
- means (e.g. electronic means) for associating the customer device 181 with a predefined customer location;

"Association" means any type of association, and in particular the fact of acquiring and possibly storing or processing the location information (e.g. predefined) by the claimer device and/or by the customer device.

"Predefined location" means a site which has been identified or defined before performing the method according to the present description. In particular, a predefined customer location may be a dwelling near which the association means of the customer device 181 are positioned.

The association means of the customer device 181 to a customer location (predefined) may advantageously comprise an association protocol of the customer to a street number, as described below.

"Claimer location" means a site in which the claimer device is present. The association means of the claimer device 171 to a claimer location may advantageously comprise a geolocation system or more in general localization by triangulation or by means of beacons or other general technique available in the field.

Hereafter, *inter alia,* examples of such means will be given and two specific examples of the application of the solution of the present description will be described. However, it is apparent that besides having an interface device or not, other features which are not strictly related to such device can be combined without any restriction, as a person skilled in the art will effortlessly understand from the following.

### Solution without interface devices between claimer device-customer device.

In a particular embodiment of the present description, no third-party entities are necessary with respect to the claimer device, the customer device and the server, these being the only communicating entities: the intercom service is fully virtualized.

Advantageously, the user experience in the embodiment of the solution described herein, in which physical interface and communication devices between claimer device and customer device are not necessarily present, comprises the following steps:
1. The claimer device 171 (or the Claimer 170, of course), having reached the location to be visited, e.g. in front of the street number of a home, accesses to the *front end* of the solution provided by the APP on the claimer device 171;
2. The claimer device 171 (or the Claimer 170, of course) logs into the APP 130, deciding whether to enter with a qualified identity (SPID - public digital identity system - or other digital identity certificate) or a non-qualified identity (username/password or other credentials);
3. By virtue of a certified georeferencing (see for example the solution described in patent application ITRM20140129), which is only an example of the aforesaid association means of the claimer device 171 to a claimer location, the claimer device 171 visualizes the list of street numbers visible and available in the zone, list provided by the server 140; by selecting the desired street number, the names of the residents of that particular street number are visualized according to the status and visibility level predetermined by each resident (customer device 181 and/or Customer 180); such list was previously established through association means of the customer device 181 to a predefined customer location, e.g. through online identification and registration means;
4. If the desired apartment is visible and available, the claimer device 170 rings the telephone (to be understood as ringing sound or other connection request notification) towards the customer device 181, advantageously through the server 140; more in general, the claimer program 130 sends to the server 140 said claimer geolocation information together with the claimer identification information (of the claimer 170, i.e. of the claimer device 171) and a contact request with the customer device 181;
5. Preferably, the server 140 identifies the claimer device 181 on the basis of the claimer identification information;
6. If the identification is successful, the ring is sent by the server 140 to the Resident (Customer 170 and/or claimer device 171) associated with the selected apartment, routing the call (more in general, contact request, also without direct communication between customer and claimer devices) on one or more mobile or fixed devices 181 previously registered by the Resident and associated with that apartment;
7. The Customer 180 and/or customer device 181 is notified about the intercom by the APP 150 which preferably has a screen with the image of the entity or subject who is calling on the intercom and with the possibility of replying, sending a message or denying, either communicating the decision to the server 140 and/or to said claimer program 130 or not;
8. When the Customer 180 and/or customer device 181 replies to the call, audio is preferably activated together with the "peephole" function (e.g. web conference), if it is advantageously set or selected each time, through which to interact with the Claimer 170 and/or claimer device 171;
9. The Customer 180 and/or customer device 181, on the basis of the information received from the Claimer 170 and/or claimer device 171 (qualified/non-qualified identity, knowledge of the Claimer, etc.) may decide whether to open and to let the Claimer 170 in or not.
10. If the Customer 180, i.e. the customer device 181 is not present in the apartment, they can still receive the ring remotely on the customer device 181 and they can decide whether to reply, as well as the type of reply to provide.
11. The APP 150, according to a specific example of the present description, can record all events and produce reports accessible and stored in areas accessible exclusively by the Customer 180 and/or customer device 181.

The visibility function of the Customer and/or customer device 181 can be implemented in all embodiments. "Visibility" means that the Customer and/or customer device 181 has authorized sharing of information about their presence (i.e. of the customer device) with the claimer devices which are also only temporarily in a customer area.

"Identification information" means any information which makes it possible to univocally determine a Claimer/Customer or their device or one of their associated devices. For example, the SPID information mentioned above or other credentials or identification numbers of mobile devices, or equivalent.

For purposes of the present description, "contact request" means any information which signals to the Customer that the Claimer wishes to contact the Customer remotely or personally. Existing protocols or alarms or reports of various kinds can be used.

The communication between the mobile devices of the Customer and of the Claimer, either direct or passing through the server 140, may also be automated without the subjects needing to intervene to authorize or approve information and/or actions, e.g. in cases of trusted people already in the address book or in the case of robots.

The following Tables 1-3 diagrammatically indicate the various features of the system 100, all of which can be implemented individually and separately or in any subset, or all together as a whole.

**Table 1 - Common functions of the Claimer/Customer and/or their devices**

| **FUNCTION** | **DESCRIPTION** |
|---|---|
| **REGISTRATION/IDENT IFICATION** | Registration of a new account with respective (optional) identification of the Customer 180 and/or customer device 181 in order to certify the identity and affiliation with the street numbers/apartments that they will declare and activate during registration to the service. |
| **AUTHENTICATION** | Access to the APP 150 via simple credentials (USR/PWD) released during registration or via digital identity (e.g. SPID). |
| **GEOLOCATION** | Detection of the position by means of GPS (or GSSN) available with the claimer device 171 on which the APP 130 is installed for locating the position of the Claimer and/or of the claimer device. Geolocation may be achieved with any other means, e.g. triangulation of GSM cells or use of specific beacons. |
| **MANAGE ADDRESS BOOK** | Access to system user address book management (Customer and Claimer and/or their devices) which are saved in the personal address book. |
| **IMPORT CONTACTS** | Import of contacts from one's address book with highlighting of the contacts who use the system. |
| **ADD/REMOVE FROM FAVORITES** | Possibility of adding/removing a contact to/from a list of "favorite" contacts to allow the Customer/Claimer and/or their associated or integrated devices a quicker access to the selected contacts and to distinguish them more easily with respect to all the others. |
| **CREATE/DELETE GROUP** | Possibility of creating or deleting groups of contacts, so as to be able to group contacts as "friends", "coworkers", "family", etc. and being able to apply the rules to them. |
| **BLOCK CONTACT/GROUP** | Possibility of blocking (and thus inhibiting calls) from given contacts or groups of contacts. |
| **CALLS LOG** | Visualization of all the logs of calls made or received. |

**Table 2 - Functions of Claimer/Customer and/or claimer devices**

| **FUNCTION** | **DESCRIPTION** |
|---|---|
| **LIST OF STREET NUMBERS WITH GEOLOCATION** | Visualization of the list of street numbers available near the GPS location geolocalized by the APP 130 of Claimer device 171. |
| **APARTMENT LIST ASSOCIATED WITH THE STREET NUMBER** | Visualization of the available apartments associated with a street number selected from the list of available street numbers. |
| **APARTMENT LIST WITH DISPLAYED QR CODE** | Visualization of available apartments associated with the street number at which a specific QR Code is displayed - optional feature alternative to geolocation or confirmatory of the geolocation of the claimer device 171. |
| **INITIATE CALL** | After having selected the desired apartment (by sending recognition information of the selected customer to the server), the claimer device 171 may send the call towards the customer device 181 by means of one of the call options that the Customer 180 will have pre-enabled. |
| **VOICE CALL ONLY** | If enabled by the Customer 180 and/or customer device 181, the Claimer 170 and/or the claimer device 171 can only make "voice" calls. |
| **VOICE CALL + PEEPHOLE** | If enabled by the Customer 180 and/or customer device 181, the Claimer 170 and/or the claimer device 171 can make a "voice" + "peephole" call, i.e. by enabling the front camera on the mobile or fixed device 171. |
| **CALL WITH MESSAGE** | If enabled by the Customer 180 and/or customer device 181, the Claimer 170 and/or the claimer device 171 can only make "message" calls, i.e. by sending a text message. |
| **CALL WITH PIN** | If enabled by the Customer 180 and/or customer device 181, the Claimer 170 and/or the claimer device 171, in order to make one of the calls described above, may pre-enter a PIN known to themselves having been previously shared by Customer 180 and/or by the customer device 181. |

**Table 3 - Functions of Customer and/or customer devices Embodiment using claimer-customer device interface devices**

| **FUNCTION** | **DESCRIPTION** |
|---|---|
| **CALL MANAGEMENT** | The Customer 180 and/or the customer device 181 will be able to visualize the incoming call and decide the action to perform. |
| **CALLER DATA VIEW** | When the mobile device or smartphone rings, the APP 150 will visualize the data of the contact, if present in the contacts of the customer device 181, or will visualize the data that the Claimer 170 and/or the claimer device 171 will be set as the introduction data. Moreover, if Claimer 170 made the registration or identification by means of a certified identity (e.g. SPID), the APP 150 will provide evidence of the reliability of the identity of the Claimer 170 and/or of the claimer device 171 (icon in SPID shared graphics). |
| **DENY CALL** | The Customer 180 and/or the customer device 181 may choose to deny the call, possible selecting an auto-reply message. |
| **PEEPHOLE ACTIVATION** | Before replying or denying, the Customer 180 and/or the customer device 181 can enable (if not active) the "peephole" function, which enables the front camera of the claimer device 171. |
| **VOICE REPLY ONLY** | The Customer 180 and/or the customer device 181 may reply by selecting the "voice" option only and start the conversation with Claimer 170 and/or with the claimer device 171. |
| **VOICE REPLY + PEEPHOLE** | The Customer 180 and/or the customer device 181 may reply by selecting the "voice" + "peephole" option and start the video-call with Claimer 170 and/or with the claimer device 171. |
| **APARTMENT MANAGEMENT** | The APP 150 can visualize the list of registered apartments to access the configuration of each one. |
| **NEW APARTMENT REGISTRATION** | The Customer 180 may add new apartments. |
| **REGISTERED APARTMENT DELETION** | The Customer 180 may remove a previously registered apartment. |
| **CHANGE OF STATUS** | It will be possible to configure the status for each apartment, e.g.: available \| back soon \| do not disturb \| not available \| invisible |
| **SET AUTOMATIC STATUS CHANGE** | It is possible to set an automatic status change as a function of one's GPS location for each apartment (e.g.: if one is not home, the home status can be automatically set to "unavailable"), or as a function of time (e.g. from 20:00 hours to 07:00 hours the status can be automatically set to "do not disturb") . |
| **CALL ENABLE WITH** | For each apartment, it is possible to |
| **PIN** | enable the call only by entering a PIN that the Resident must have previously shared with Claimer 170 and/or with the claimer device 171: The Customer 180 and/or the customer device 181 can activate this feature by choosing the PIN. |
| **ENABLE PEEPHOLE BY DEFAULT** | For each apartment, it is possible to set the peephole as active by default. The claimer device 171, when calling, will automatically enable the front camera. |
| **SET STATUS MESSAGE** | For each apartment, it is possible to set a status message to provide additional information to the claimer device 171 before calling (e.g. "No advertising", "No soliciting", etc.). |
| **SET AUTOMATIC REPLY** | For each apartment, it is possible to set an automatic reply to send to the Claimer 170 and/or to the claimer device 171 after calling. The automatic reply may be set to single contact, all contacts, single group of contacts, all favorites, unknown contacts. In this manner, it is possible to provide different messages as a function of the type of claimer (device) 170. |

Fig. 2 shows in detail an embodiment in which another entity is also present in addition to the customer device 181 - claimer device 171 - server 140 triad, more specifically (at least) an interface device 160 (in general, association means 160 of the claimer device 171 to a claimer location, or "one-time password generation (OTP) device/means", e.g. located in a predetermined area associated with the Customer 180. "Area" means, inter alia, a portion of the earth surface or a volume which is projected on such portion of earth surface. The association with the customer device may be such that the customer device is not necessarily always present in such area.

In this case, the physical interface device 160 can generate, e.g. upon request by the claimer device 171 which needs to interact with the customer device 181, according to predetermined interface standards, OTP (*One Time Password*) codes, e.g. natively associated with the physical interface device 160 itself and logically associated with the (one or more) customer device (or devices) 181 (Customer 180). The interface device 160 visualizes codes, preferably in form of QR code, e.g. on a small electronic ink screen with very low energy consumption. A variant of this arrangement may be obtained by using NFC technology for transmitting codes (e.g. QR code) in contactless mode. By means of a specific APP 150 installed on the customer device 181, the Customer 180, who adopted the interface device 160, registers the interface device 160 itself by associating it with their own digital identity, e.g. but not exclusively a SPID identity (public digital identity system).

It is worth specifying here that the customer device 181 may be associated with multiple interface devices 160. Their management is described below in this description.

In general, the APP 150 may be used by the Customer 180 and/or by the customer device for one or more of the following activities:
- Registering a customer device 181 on the Server 140 by means of authentication, in particular SPID authentication or other electronic identity credentials;
- Registering one or more interface devices 160 (Cf. 152 in Fig. 2);
- Receiving contact requests generated by the claimer device 171 by interaction with the interface device 160;
- Managing the communication with the claimer device 171;
- Recording one or more secondary customer devices 181 (not shown) on which to receive the contact requests (requests for communication between customer device and claimer device).

The Claimer 170 and/or claimer device 171 interested in being identified, after having registered to the server 140, by using an APP 130, installed on the customer device 171, by means of an electronic identification service (e.g. SPID), uses the same APP 130 to scan in 162 the QR code (more generally the Claimer location information, which may include, according to the present description, their own subject information and/or the information of their device) and sends (advantageously in automatic manner) the location information and/or claimer identification information and/or the contact request (request also termed "Claim") to the customer device 181, preferably passing through a server 140.

In general, the APP 130 is used by the Claimer 170 and/or by the claimer device 171 for one or more of the following activities:
- Registering with the system through SPID authentication or other electronic identity credentials (they may express their consent to personal data processing in this step);
- Reading the QR code generated by an interface device 160 to request the contact with the customer device 181; and
- Sending in 132 to the server 140 information contained in said QR code, a contact request with the customer device 181 (possibly contained in the same QR code) and optionally also recognizing customer information (possibly contained in the same QR code) with which the server can know to which customer device in a predefined list the contact request must be sent;
- Managing communication with the customer device 181.

The Customer 180 will receive the contact request on their (one or more) customer device (or devices) 181, validated by the server 140 in the case of validation of the identity of the Claimer and/or claimer device. The server, according to an aspect of the present description, performs the role of authority or certification service. The contact request is sent together with information of the claimer 170 (including, for example, a registered photograph of the Claimer 170) and/or of the claimer device 171 and may start an interaction between Claimer and Customer based on the trust provided by the service 140. Alternatively, the customer device 81 may initiate a direct communication with the claimer device 171.

According to an aspect of the present description, the customer program 150 may send a contact approval or denial to said server 140 and/or to said claimer program 130. Such approval or denial are signals and/or information which can be based on information exchanged in said direct communication.

Conveniently, but not limitedly, the APP 130 and the APP 150 are a single APP or program which can perform the two functions of the Customer and of the Claimer.

In the optional scenario in which there is an affiliation relationship 111 between the Claimer and/or claimer device and a third-party organization 110 (Enterprise), the contact request is complemented with such affiliation information which can be verified by the service 140 by virtue of the communication 115 with the organization 110. The communication 115 between the organization 110 and service 140 may be prior to or simultaneous with the request to be contacted by the Claimer and/or claimer device.

### Service activation for Customer and Claimer

Referring to Fig. 2, and for all the embodiments below, the steps of the activation process of the service for single user are described below:
1. The claimer/customer device 171, 181 (smartphone, tablet or other) downloads the APP 130,150 from the online store and installs it;
2. the APP 130,150 requests, respectively in 131,151, the log-in of a previously registered user, and if not available continues with the registration of the user;
3. optionally, the Claimer/Customer 170, 180 and/or their devices chooses whether to register with certified or simple identity;
4. optionally, in the case of simple identity:
   a. the Claimer/Customer 170, 180 chooses a username (univocal);
   b. the server 140 verifies the availability of username (if it already exists, it asks the Claimer/Customer 170, 180 to choose a new one) ;
   c. the Claimer/Customer 170, 180 sets a password;
   d. the server 140 combines the created user with the system account which is being created for the Claimer/Customer 170, 180;
5. optionally, in the case of certified identity (hereinafter, SPID authentication, but other methods are possible):
   a. the Claimer/Customer 170, 180 selects an IDP provider which possesses the identity;
   b. the Claimer/Customer 170, 180 enters the SPID username;
   c. the Claimer/Customer 170, 180 enters the SPID password;
   d. Optionally: The Claimer/Customer 170, 180 also enters an OTP (if the service level requires access with SPID level 2);
   e. the server 140 verifies the identity with the IDPS and combines the system account of the Claimer/Customer being registered;
6. the Claimer/Customer 170, 180 visualizes the personal data processing disclosure note; and
7. optionally, the Claimer/Customer 170, 180 consents to processing.

### Visibility activation for the customer device

Hereinafter, the description of the visibility activation process of the street number and of the apartment for the customer device 181, applicable to all embodiments:
1. the Customer and/or the customer device 181 opens the APP 150, logs in and selects the "add apartment" function;
2. the Customer 180 is invited to enter the address (city, street, street number and post code) of the apartment that they want to add;
3. the APP 150 searches the address in the existing ones and verifies whether it is already identified;
4. if the street number is already identified:
   a. the APP 150 suggests the street number to Customer 180;
   b. the Customer 180 confirms the existing street number;
5. if the street number has not been identified:
   a. the APP 150 highlights the street number on map (e.g. Google Maps®);
   b. the Customer 180 confirms the entered street number and the location on the map;
6. having selected the street number, the Customer 180 sets the apartment;
7. The APP 150 shows whether the apartment is already identified as associated to another user (other Customer);
8. if the apartment is already identified:
   a. the APP 150 asks the Customer 180 whether to report the abuse or whether the Customer is a "co-resident";
      a1. if abuse is reported
         i. a report is sent to the system service support (not shown) to start the appropriate verifications (see "REPORTING AN ABUSE");
         ii. the apartment is kept active, but marked as "abuse reported", the current Customer 180 receives a notification of the report (the reporting party remains anonymous);
         iii. the current Customer 180 cannot be associated with the selected apartment until the end of the report verification;
         iv. at the end of the report, if ended positively, the Customer 180 will receive a notification to complete the association with the pending apartment;
      a2. if it is a "co-resident":
         v. a notification is sent to all the "co-residents" already associated with such apartment that "new Customer asks to be added to the apartment" showing all registration data;
         vi. at least one of the co-resident Customers must accept the request of the new co-resident Customer;
         vii. as soon as one of the co-resident Customers accepts the invitation, the apartment is also associated with the current account;
9. if the apartment is not identified:
   a. the apartment is associated with the current Customer 180;
10. once the apartment is associated, the Customer 180 can configure it according to the functions described in the previous chapters (status, automatic message, visible personal data, etc.).

The visibility activation means of the customer device, comprising one or more of the means described in the steps above, including code means 130, 150 of the APP which allow visibility activation, are an example of association means of the customer device 181 with a predefined customer location. By virtue of such visibility activating means of the customer device, the claimer device can recognize that the customer device is available, e.g. by means of a notification from the server 140, and enter Customer recognition information in the contact request on the server 140, so that the server 140 knows to whom the contact request must be submitted. This can be done simply in reply to the aforesaid visibility notification, the corresponding recognition information being included or simply associated with the contact request.

### Abuse settlement

The settlement process of an abuse by the system support service according to the present description and applicable to all embodiments is described below:
- When the report is received, the support service starts the abuse report proceeding;
- Concurrently, the support service contacts both the current Customer 180 at the indicated apartment and the user (another Customer) who reported the abuse, asking both to provide certain evidence of residing at the reported address, street number and apartment;

- both Customers will be required to reply within a given period of time to the support service (video recognition and sharing of identity documents and certificates of residence may be required);
- having made the appropriate verifications, the report will be settled by assigning the apartment to the certified resident Customer;
- the report will be removed and no longer visible in the step of searching;
- the apartment will be marked as "certified apartment" (if further abuse complaints are sent, only the user who sends the report will be required to demonstrate the opposite, but the apartment will not be marked as "reported abuse"); and
- further to the verifications, one of the two users, current Customer or Customer who reported the abuse, could be reported to the authorities for identity theft or attempted identity theft.

### Interface device

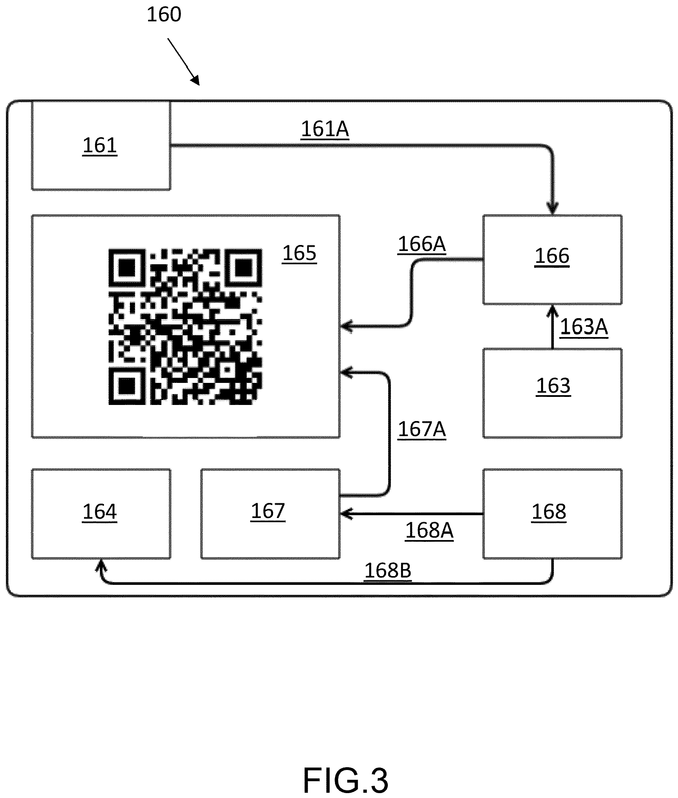

The interface device 160 mentioned above for the embodiment of Figs. 2 and 3 or in combination with other embodiments, mainly comprises a secure OTP code generator (e.g. Time-Based) 166 and, for example, a display (advantageously of the electronic ink type) 165 able to visualize OTP codes in QR code format, even if this choice is only optional, according to the present description, and any other display format is possible.

The QR code (or other code, either visible or no) represents a data structure which may contain:
- Hardware ID (univocal identifier of the device); and
- OTP (time-based one-time password).

The OTP generation is advantageously event-triggered by a proximity sensor 161 (of inductive and/or capacitive and/or magnetic and/or ultrasound and/or optical and/or any other existing type) of the device 160 of the claimer device 171 or of the claimer 170 itself. The proximity sensor 161 is optionally in connection 161A with a cryptographic processor 166. The OTP generation is based, for example, on the time provided by an internal clock 163 of the device 160 in communication with the cryptographic processor 166 via internal connection 163A.

By default, the display may visualize an image which can be loaded by the user by means of USB 168 or other loading system (e.g. showing the name of the Customer or identifier of the customer device 181 and/or apartment number), through the internal connection 168A, in the memory 167, e.g. in connection 167A with the display 165. The USB port 168 can also be used to recharge a battery 164 of the device by means of an internal electrical connection 168B.

Preferably, each OTP has a limited period of validity. At the end, the device can return to show the default image.

In addition, instead of visualizing the code, a NFC (*Near Field Communication*) communication procedure of information or other means which avoids a visualization or which work together with a visualization can be used.

The interface device 160 is an example of the association means of the claimer device 171 to a claimer site, in particular to a predefined claimer location.

### System APP

The system 100 envisages one or more APPs 130, 150 which can be used respectively by the customer device 171 and by the claimer device 181. Preferably, however, there will be a single APP, which may comprise one or more of the following basic functions wherein each element of the sub-lists is optional:
- Login via identification;
- Claimer/Customer user registration to the system (e.g. by using a strong authentication), with, optionally:
   ∘ Collection of the personal data processing consent;
   ∘ Subscription to the service;
- Recording (or "binding", i.e. establishing an association between two devices) of an interface device 160 (not already registered) to the customer device 181, comprising the following actions:
   ∘ The APP 150 of customer device 181 reads an identifier of interface device 160, e.g. a QR Code (not shown), by the interface device 160 itself;
   ∘ The APP 150 of customer device 181 calls the server 140 by sending:
      ▪ the identifier of the device 160, retrieved from the read QR code,
      ▪ a fingerprint of the mobile device 181 on which the APP 150 is installed; and
   ∘ Association on server 140 side of the device 160 with the APP 150 which has sent the request;
- Management of registered mobile/fixed/interface devices:
   ∘ List of registered devices;
   ∘ Management of metadata associated with each device (Alias);
   ∘ If the device is connected via USB cable, the modification of the default image of the device is allowed (this applies to the interface device 160).
- Addition of a second Customer:
   ∘ Call to the service of adding a Customer by sending the ID of the interface device 160 and an identification datum of the second Customer (e.g. username or e-mail). The second (or in general further) Customer must have already registered to the service with their credentials as above and possibly an additional authentication factor, e.g. an OTP;
   ∘ The service sends push notification to the authorized Customer;
- Association of a customer with a further device:
   ∘ Registration of a new interface device 160 following an authorization notification received from the Customer.
- Presence status management:
   ∘ For each registered interface device 160, it is possible to set the presence status;
- Contact Request (Claim):
   ∘ Generation of the QR code dynamically according to the OTP, by the device 160;
   ∘ Reading of the QR Code of the interface device 160, by the Claimer;
   ∘ Sending the contact request to the Customer 180 associated with the interface device 160;
- Contact notification reception:
   ∘ Visualization of the incoming contact request (telephone "ring" to start communication: only audio, audio/video, only chat, deny) by the device 181 of the Customer 180; and
   ∘ Visualization of the data of the Claimer 170 (only the information that the Claimer 170 will enable for visualization in the step of configuring are visualized).
- Opening of the direct communication channel with the Claimer 170 (the data pass through a trusted server 140 of the system):
   ∘ The users 170, 180 manage the communication by means of a chat (or chatbot if at least one of the two is a robot or an expert algorithm (artificial intelligence) or other means, such as audio/video communication systems, for example.

### Trust service

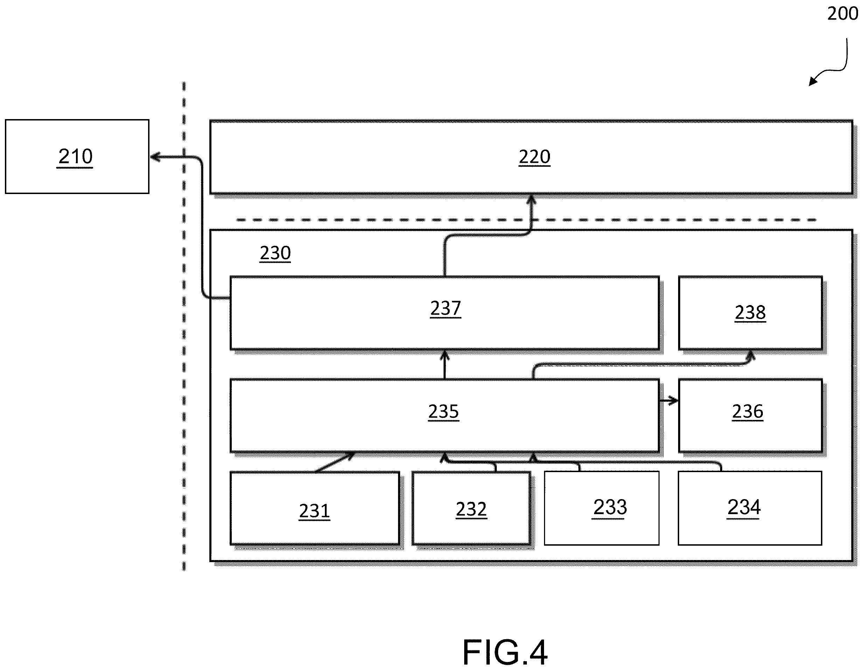

With reference to Fig. 4, the trust service 200 installed in the server 140 of the present description is a platform for providing the functions of the system 100. In particular, the Trust Service 200 of the server 140 is responsible for:
- Managing registrations of Claimer/Customer and of the mobile/fixed/interface devices using certified identity credentials, e.g. SPID (possibly by querying in 125 an external IdP 120,210 or an internal IdP 220, Cf. Fig. 2);
- Validating the Claim requests by the Claimer;
- Activating the communications between claimer device 171 and customer device 181; and
- Interacting (as Service Provider) with the IdP service 120,220,210 (Identity Provider, e.g. which manages the SPID credentials) for the verification of the SPID credentials or other electronic identity credentials; for example, credentials issued in one country may be used in another country by virtue of a mutual recognition platform which implements the EIDAS regulation or other international regulation.

Included in the trust service 200 is a set 230 of functions/modules, which are described below.

On the "lowest" layer, the REST 232 (*Representational State Transfer*) interface comprises resources exposed over HTTP, which might be invoked to execute activities, and is configured for providing the following services to the APP 130, 150:
- Login;
- Customer/Claimer user registration services (OnBoarding) ;
- Communication computerized device registration and management service (e.g. mobile) 171, 181; and
- Claim services.

The interface 232 can also be made with resources other than REST.

In this application layer, the trust service may be further provided with a platform for communication via chat 233 and/or via channel audio/video (e.g. WebRTC) 231, in addition to an administration web interface 234.

The back-end application layer 235 is designed to orchestrate the services. The back-end 235:
- integrates authentication services, e.g. SPID, by means of the SPID Authentication Module 237 described above in Fig. 4; and/or
- verifies the OTPs generated by the interface device in the OTP verification module 238; and/or
- maintains data persistence in a database 236 either internal to the server 140 or connected to the server 140.

In particular, the SPID authentication module 237 is a module responsible for authenticating SPID credentials towards the SPID identification provider 220 and, optionally, towards other credited SPID IdPs 210.

### Use cases of the system

Some use cases which describe the interactions between users (Customer 180 and Claimer 170 and/or their devices 171, 181) and the system 100 are described below.

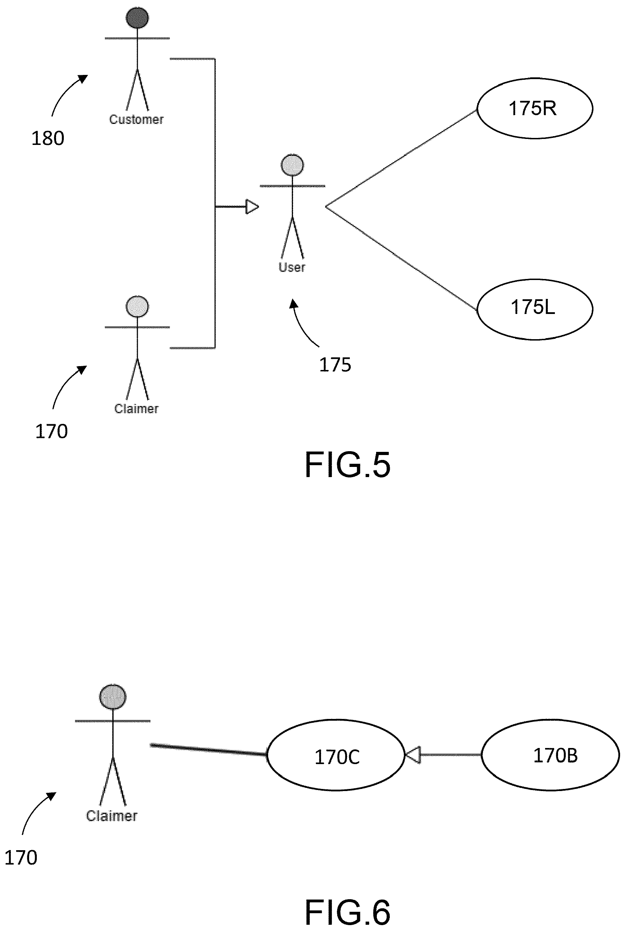

The first two use cases, Registration and Login illustrated in Fig. 5, are common to both categories of Customer/Claimer 180, 170, users and are described in the following table.

**Table 4 - Use case for Registration and Login**

| **Use case** | **Description** |
|---|---|
| **Registration** | • The user starts the APP installed on their mobile device |
| | • The APP shows the login or new user registration options |
| | • The user selects registration and is guided in the *onboarding* process which includes one or more of the following activities: |
| | ∘ SPID Authentication Level 2. |
| | ∘ Management of the personal data processing consent. |
| | ∘ reading acknowledgement and subscription to the service. |
| | ∘ Verification via OTP of the mobile device on which the APP is installed. |
| | ∘ Optionally, capturing the photograph of the user. |
| | ∘ optionally, a PIN for unlocking the APP may be selected. |
| **Login** | • The user logs into the system using, for example, their credentials, e.g. SPID. In this case, for the step of logging in, it is convenient to use only SPID authentication level 1. |

The third use case relates to the Claimer side 170 and/or claimer device 171, and is shown in Fig. 6 and described in the following table.

**Table 5 - Use Case on the Claimer and/or claimer device side**

| **USE CASE** | **Description** |
|---|---|
| **Claim 170C** | • The Claimer 170 starts the APP 130 installed on their mobile device 171. |
| | • The Claimer 170 logs in with their first level identification credentials or other. |
| | • The Claimer 170 starts the Claim. The APP 130 opens the QR code reader (not shown). |
| | • The user approaches their mobile device to the interface device 160 so that the proximity sensor 161 triggers the generation in the processor 166 and the visualization on the screen 165 of a new OTP in QR code format: |
| | ∘ The interface device 160 generates an encrypted QR code containing the identifier of the device itself and the new OTP generated as a function of the seed (associated with the interface device itself) and a timestamp of execution. |
| | • The Claimer 170 scans the QR code. |
| | • The Claimer 170 the Claim request sends to the server 140 together with the QR code. |
| | • The server 140 verifies the SPID session (or in general the identification session) activated by the Claimer 170 together with the fingerprint (e.g. a univocal serial number generated when the APP is installed) of the mobile device 171. |
| | • The server 140 verifies the ID of the device 181 of the Customer 180 present in the QR code. |
| | • The server 140 verifies the OTP generated by the interface device, also present in the QR code. |
| | • The server 140 uses the ID of the interface device 160 to track back to the Customer 180. |
| | • The server 140 verifies the status of the Customers with respect to the interface device 160 actuated by the Claimer 170. |
| | • The server 140 complements the Claim with the data of the Claimer 170 obtained in the step of registration (e.g. photograph, profile, etc.). |
| | • The server 140 sends a push notification of Claim to mobile devices 181 associated with the Customer 180 registered on the system 100. |
| | • The Customer 180 receives the Claim notification. |
| | • The Customer 180 either accepts or denies the Claim notification. |
| | • The Claimer 170 receives the outcome of the Claim. |
| **Audio/Video Connection 170B** | • The Customer 180 activates the audio/video channel, chat, etc. (on the APP, not shown). |
| | • The APP automatically opens the communication between customer 180 and Claimer 170 and/or their devices. |

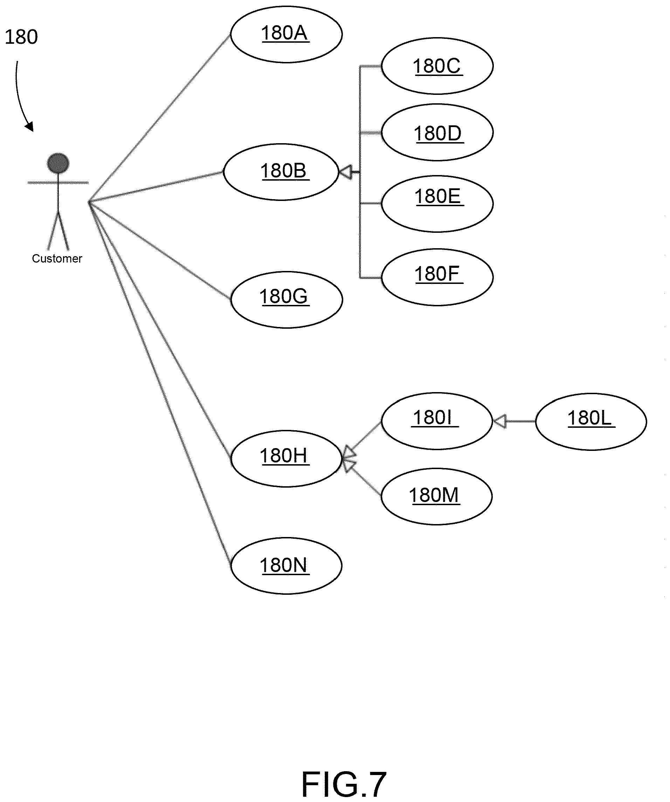

The fourth use case relates to the Customer side and is shown in Fig. 7 and is described in the following table.

**Table 6 - Use cases on the Customer and/or customer device side**

| | |
|---|---|
| **Use cases** | **Description** |
| **Bind 180A** | • The Customer 180 starts the registration function of a new device 181. The APP 150 starts the function of the reading of the QR code of the interface device 160. |
| | • The user (Claimer) scans the QR code of the interface device 160. The APP 150 invokes the registration service passing the data to the interface device 160, the identifier of the Customer 180 and the fingerprint of the mobile device 181 used. |
| | • The system 100 verifies the data validity and whether the device 181 was already registered by another user (other customer). In such a case, the registration fails, by sending a notification to the owner of the device 181 (see the Handle Bind notification case in the following table). |
| | • If the mobile device 181 is not already registered, the system proceeds by associating the Customer 180 to the mobile device 181. |
| | • The mobile device 181 is added to the list of registered devices on the APP 150. |
| **Handle Device 180E** | • The Customer 180 visualizes the list of their own interface devices 160. |
| | • The Customer 180 can select a single device 160 to: |
| | ∘ Edit the data of the selected device; |
| | ∘ Set their status with respect to the selected device (e.g.: busy, not home, free); |
| | ∘ Authorize another device 181 of the customer 180 to the device 160. |
| **Set Device Data 180B- 180C** | • The Customer 180 may set the data with which the mobile device 181 is registered on their APP 150. For example, the visualization name can be edited by entering an address. |
| | • The Customer 180 may change the automatic reply messages to the Claim. |
| **Set Status 180C-180D** | • The Customer 180 may set their status in relation to a device 160 so as to manage their availability for the service. |
| | • The Customer 180 may select any auto-reply message of the server 140 to the Claim. |
| **Add User 180B-180E** | The Customer 180 may authorize another mobile device 181 to receive notifications and Claim relating to their own interface device 160; |
| | • The Customer 180 sends the identifier (username, ID) of the mobile device 181 that they want to authorize and the identifier of the device 160. |
| | • The function is protected by strong authentication. |
| **Claim History 180B-180F** | • The Customer 180 and/or customer device 181 visualizes the list of Claims received for each registered device 160; |
| | • The server 140 can track and store the received Claims log |
| **Bind as Second User 180G** | • The additional mobile device 181 receives an authorization notification (e.g. push notification) relatively to an interface device 160 of the main Customer 180. |
| | • If they accept, the mobile device 181 is added to the list of their devices. |
| **Handle Claim 180H** | • The Customer 180 receives a Claim on their mobile device 181 (User Experience similar to receiving a "ring" telephone call). |
| | • The Claim shows: |
| | ∘ The name of the activated interface device 160 (e.g. Home, Via del Corso) |
| | ∘ The identification data of the Claimer 170 who had previously authorized and enabled to visualize, including one or more of the following items: |
| | ▪ Name Surname; |
| | ▪ Photograph; |
| | ▪ Other data sent by the Claimer 170; |
| | ▪ Data of the company to which the Claimer is affiliated. |
| | • Similarly, upon receiving a voice call, the APP 150 makes it possible to accept or deny the claim. |
| **Accept Claim 180H-180I** | • The Customer 180 and/or customer device accepts the claim. The call with which the contact is requested typically stops. |
| | • The system notifies the claimer 170 and/or claimer device 171 that the request has been accepted. |
| **Open Audio/Video Connection 180I-180L** | • The Customer 180 and/or customer device 181 requires opening the audio/video channel towards the Claimer 170 and/or claimer device 170. |
| | • Advantageously, the server 140 initiates the audio/video call. The call can also be started directly by the Customer or by the Claimer and/or their devices. |
| | • The APP 130 of the Claimer accepts the call automatically. |
| **Deny Claim 180H-180M** | • The Customer 180 and/or customer device deny the claim. |
| | • Optionally, the Customer 180 may select a predefined denial message sent by the server 140. |
| | • The server 140 notifies the denial to the Claimer 170 and/or claimer device. |
| **Handle Bind notification 180N** | • The Customer 180 and/or customer device receives notification of a registration attempt of an interface device 160 associated with them by another user. |

In all embodiments, the system 100 according to the present description, as a function of the appropriate configurations, may also advantageously allow:
- **Remote ringing:** when someone rings the apartment, the connected mobile device or devices ring even if they are not present, as a function of the status set by Customer, whereby making it possible to talk with the person (and/or robot) even if they are not home.
- **Multi-device call:** if the Customer has configured multiple devices associated with the same apartment, the call can be received simultaneously on all devices which have been configured to allow the apartment to be managed by more co-resident Customers of the same apartment.
- **Temporary intercoms:** the solution makes it possible to manage also temporary street numbers or apartments to be active in predefined time windows. This function could allow the activation of the service for temporary events or with a predefined programming (trade shows, shared offices, hired spaces, hotels, hospitals).
- **Remote door opening function:** the solution makes it possible, following a ring and once the identity of the person and/or robot who/which rang is established, to open the door remotely, in total safety, by virtue of the use of an electronic lock (home automation device) connected remotely with the APP and enabled by means of "strong authentication" operation.

### Advantages of the invention

According to an aspect of the present description, the solution has the objective of providing an APP-based intercom service installed on mobile devices, with or without the aid of physical technology installed on the walls of the street number.

The technology according to the present description is based on trust services and makes it possible to increase safety and provide more advanced services with respect to the physical intercoms, either traditional or of the code type, installed in buildings.

According to an aspect of the solution according to the present description, it is possible to access an APP from a mobile device to make available some basic functions identical to those of the traditional physical intercom of a street number/apartment, plus a series of functions and innovative services which make the intercom according to the present description much more evolved and configurable than the current one.

Because the solution according to the present description mainly comprises a mobile APP instead of physical technology, it makes it possible to reduce or eliminate many costs for installation, system preparation and maintenance, typical of traditional intercoms.

Moreover, by de-materializing the intercom, it is made manageable and configurable both on *admin* side (functions such as, for example, "name change" and other standard settings) and on user side (function settings, status, connected devices, etc.).

Hereto, we have described the preferred embodiments and suggested some variants of the present invention, but it is understood that a person skilled in the art can make modifications and changes without departing from the corresponding scope of protection, as defined by the appended claims.

## Claims

1. A method for initializing a localized, one-time communication between communication computerized devices comprising the use of:
- a communication computerized device named "claimer device" (171), the claimer device (171) being a mobile device on which a computer program termed "claimer program" (130) is installed for a one-time initialization of a communication;
- a communication computerized device termed "customer device" (181), the customer device (181) being a mobile device on which a computer program named "customer program" (150) is installed for a one-time initialization of a communication;
- a device (160) for generating one-time password termed "OTP", the device being placed in a predefined area, and being configured for:
∘ detecting the presence of said customer device (181) by means of a proximity sensor (161),
∘ automatically generating an OTP on the basis of said presence; and
∘ communicating said OTP and a univocal ID of the one-time password generation device (160) in said predefined area to said customer device (181) wirelessly;
- a server (140);
the method comprising the following steps:
A. detecting, by the proximity sensor (161), the proximity of said claimer device (171) and automatically generating an OTP;
B. acquiring (162), by the claimer device (171) and the claimer program (130), said univocal ID and said OTP from said one-time password generation device (160);
C. sending (132) by the claimer program (130) to the server (140) said univocal ID and said one-time password together with a contact request with the customer device (181),
D. identifying, by the server (140), the claimer device (181) on the basis of said univocal ID and said OTP;
E. in the case of positive identification in step D, sending (142), by the server (140), the contact request to the customer device (181);
F. acquiring said contact request by the customer program (150); and
G. starting, by the server (140) and/or customer program (150), a communication between the customer device (181) and claimer device (171).

2. A method according to claim 1, wherein the following step is performed after step F:
H. sending an approval or a denial of the contact request, by the customer program (150), to said server (140) and/or said claimer program (130).

3. A method according to claim 2, wherein the approval or denial of step H is sent on the basis of information exchanged in said direct communication of step G.

4. A method according to one or more claims from 1 to 3, wherein said one-time password generation device (160) comprises a display (165) configured to visualize a QR code which includes said univocal ID and said OTP.

5. A method according to one or more claims from 1 to 4, wherein said one-time password generation device (160) comprises a display (166) configured to visualize a QR code which includes said univocal ID and said OTP.

6. A method according to one or more of the claims from 1 to 5, wherein said one-time password generation device (160) includes a Near Field Communication unit for communicating said OTP to said claimer device (171) .

7. A method according to one or more of the claims from 1 to 6, wherein in step C the univocal ID either includes or consists of Public Digital Identity System - SPID information.

8. A method according to one or more of the claims from 1 to 7, wherein the generation of said OTP is time-based.

9. A method according to one or more of the preceding claims, wherein, before step B, a list of customer devices (181) associated with said predefined area or in an area calculated on the basis of geolocation information of said claimer device (171) is sent by said server (140) to said claimer device (171).

10. A method according to one or more of the preceding claims, wherein the claimer program (130) is integrated with the customer program (150) in a single computer application.

11. A method according to one or more of the claims from 1 to 10, wherein the claimer device (171) and the customer device (181) are smartphones, and said claimer program (130) and customer program (150) are smartphone applications.

12. A system for identifying subjects in a predefined area, including:
- a communication computerized device termed "claimer device" (171), the claimer device (171) being a mobile device on which a computer program termed "claimer program" (130) is installed for a one-time initialization of a communication;
- a communication computerized device named "customer device" (181), the customer device (181) being a mobile device on which a computer program termed "customer program" (150) is installed for a one-time initialization of a communication;
- a device (160) for generating one-time password termed "OTP", placed in a predefined area, which is configured for:
∘ detecting the presence of said customer device (181) by means of a proximity sensor (161),
∘ automatically generating an OTP on the basis of said presence; and
∘ communicating said OTP and a univocal ID of the one-time password generation device (160) to said customer device (181) wirelessly in said predefined area;
- a server (140);
wherein the claimer program (130) is configured to execute steps B-C and the customer program (150) is configured to execute steps F-H, and the server (140) is configured to execute steps D-E of the method according to the preceding claims.

13. A system according to claim 12, wherein the claimer device (171) and the customer device (181) are smartphones and said claimer program (130) and customer program (150) are smartphone applications.

14. A computer program, comprising code means configured to execute, on a computer, steps B-C and/or steps F-H and/or steps D-E of the method of one or more of the claims from 1 to 11.
